# EUROPEAN PATENT APPLICATION

(11) **EP 4 098 924 A1**
(43) Date of publication of application: **07.12.2022**
(21) Application number: 21176967.4
(22) Date of filing: 31.05.2021
(51) Int. Cl.: F16L 55/17, F16L 55/172, F16J 15/06

(54) **REPAIR COUPLING TO REPAIR A PIPELINE WHICH CAN BE CROSSED BY A FLUID AND RELEVANT METHOD**

(71) Applicant: Nova Siria S.r.l., 10060 Roletto (TO) (IT)
(72) Inventor: CORDA, Stefano, 10060 Roletto (TO) (IT); SERAFINI, Roberto, 10060 Roletto (TO) (IT)
(74) Representative: Di Sciuva, Michele

(57) **Abstract**

A repair coupling (1) is described comprising: a main body (19, 20) mountable astride a damaged zone (4) of a pipeline (2) for channelling a fluid and defining with the pipeline (2) an additional volume (10) fluidically connected with the damaged zone (4) and isolated from the outside of the repair coupling (1); the main body (19, 20) extending along an axis (A) and comprising a pair of half-shells (19, 20) with respective circumferential end plates (34, 35), lying on a plane parallel to the axis (A), facing and releasably connected to each other; and a first seal (21) interposed between the plates (34, 35) and adapted to allows the additional volume (10) to be fluid-tightly isolated from the outside of said repair coupling (1); one of the closing plates (34, 35) comprises a recess (40) for housing the first seal (21).

## Description

The present invention relates to a repair coupling for repairing a pipeline crossed by a pressurised fluid without interrupting the operation of the pipeline.

The present invention also relates to a method for repairing a pipeline that can be crossed by a pressurised fluid.

In particular, the pipeline could be used in a civil aqueduct and crossed by water or intended to channel a fluid for industrial use.

The pipelines of known type comprise a plurality of pipes connected to each other by welded couplings, interception members or connection couplings.

As a result of their use, the pipelines may have a rupture zone at the wall of one of the pipes or due to damage to the welded coupling/interception member/connection coupling. This rupture zone results in the fluid spilling outside the pipes and a consequent limitation of the operation of the pipeline.

Repair couplings intended to allow the repair of the pipeline without interrupting the operation of the pipeline itself are known.

According to a known embodiment, the repair coupling is fluid-tightly fitted astride two portions of the pipe separated by the rupture zone, and defines an additional fluid-tight volume inside which the fluid flowing out from the pipe can collect without flowing out externally to the pipe and the coupling.

For example, the repair coupling marketed under the name DUOFIT^{®} by the same Applicant comprises:
- a main body coaxially mounted on the pipe axially astride the rupture zone, and defining the additional volume available for the fluid in fluidic communication with the rupture zone and fluidically isolated from the outside of the pipe; and
- a pair of closing groups which are arranged on respective parts that are axially opposite to each other of the main body and connected to the main body.

In more detail, the main body comprises, in turn:
- a pair of half-cylindrical shells arranged coaxially and radially spaced on the pipe to be repaired and astride the rupture zone, and having respective closing plates facing each other so as to define with the pipe the additional volume available for the fluid flowing out from the rupture zone;
- a pair of first axially developed seals radially interposed in a fluid-tight manner between the closing plates;
- a pair of heads fixed to respective axial end flanks of the main body, with a prevalently axial development and fitted with limited radial clearance on the respective portions of the pipe at their radially internal end edges on respective portions of the tube; and
- a pair of rings protruding radially cantilevered from respective heads from respective parts that are radially opposite to the pipe, axially spaced from the shells and each made in two pieces which are fixed to respective closing plates.

The closing plates are tightened by a plurality of bolts, so as to cause a radial load on the first seals and to ensure that the fluid contained in the additional volume cannot flow out from the main body at the interface between the closing plates.

More particularly, the first seal rests on respective mutually facing and flat surfaces of respective closing plates.

These facing surfaces leave the first seal free in the axial direction.

In order to axially retain the first seals during the compression phase, the main body comprises a plurality of welded elements, radially interposed between the closing plates, axially spaced apart from each other, and provided to restrain the axial movement of the first seals during the bolt tightening phase.

Each head further extends beyond the relative ring on the part which is axially opposite to the main body.

Each closing group further comprises:
- a first flange axially spaced from the relative ring and head, and having a prevalent radial development;
- a second flange axially interposed between the first flange and the relative head, and having a prevalent axial development; and
- a second annular seal axially interposed between the relative first flange and a relative axial end edge of the closing plates, so as to prevent the fluid contained in the additional volume from flowing out at the interface between the main body and the closing group.

Each closing group also comprises a plurality of bolts, which connect the relative ring and first flange.

The tightening of these bolts results in an axial compressive force on the second seal.

There is a need in the industry to reduce the axial overall size and/or the weight and therefore the overall cost of the repair coupling.

There is a need in the industry to simplify the procedure for installing the repair coupling on the pipe.

There is also a need in the industry to reduce the overall sizes of the bolts required to install the repair coupling, with particular reference to the bolts necessary to tighten the closing plates and to tighten the second flanges on the respective rings.

Finally, there is a need in the industry to increase the range of pipe diameters that can be repaired by a repair coupling using the same heads.

Aim of the present invention is to realize a repair coupling, which allows to satisfy, in a simple and economic way, the above-mentioned requirement.

The aforesaid aim is achieved by a repair coupling as claimed in claim 1.

The present invention also relates to a method for repairing a pipeline as claimed in claim 10.

Further features and advantages of the present invention will become apparent from the detailed description that follows, provided by way of nonlimiting example and with reference to the accompanying drawings, wherein:
- Figure 1 shows an exploded perspective view of a repair coupling realized according to the dictates of the present invention;
- Figure 2 shows a perspective view of an assembly phase of the repair coupling in Figure 1;
- Figure 3 shows a perspective view of the repair coupling in Figures 1 and 2;
- Figure 4 shows the front view of the repair coupling of Figures 1 to 3;
- Figure 5 is a section along the line V-V of Figure 4; and
- Figure 6 is a section along the line VI-VI of Figure 4.

Referring to the attached figures, number 1 denotes a repair coupling for a pipeline 2 for channelling a pressurised fluid.

The pressurised fluid can be for civil industrial use.

The pipeline 2 comprises a plurality of pipes 3, only one of which is shown, and a rupture zone 4 from which the pressurised fluid flows out externally to the pipeline.

In the embodiment shown, the rupture zone 4 is located in a wall 5 of the pipe 3 extending along an axis A. Alternatively, the rupture zone 4 could be located at a welded coupling or an interception member or a connection coupling arranged between two pipes 3 that are consecutive to each other.

The pipe 3 also comprises a pair of sections 6 and 7 arranged on parts axially opposite to each other of the rupture zone 4.

The repair coupling 1 extends along an axis A and is mounted coaxially on the pipeline 2 at the rupture zone 4 and in such a manner that the sections 6, 7 protrude from parts axially opposite to each other of the repair coupling 1.

The repair coupling 1 defines with the pipe 3 an additional volume 10 in connection with the rupture zone 4 and fluid-tightly isolated from the outside of the pipe 3 of the repair coupling 1.

In this way, the fluid flowing out from the pipe can be collected in the volume 10 without interrupting the operation of the pipeline 2.

In more detail, the repair coupling 1 essentially comprises:
- a pair of half-shells 19, 20 releasably connected to each other;
- a pair of seals 21 interposed between the half-shells 20;
- a pair of flanges 22, 23 arranged on parts axially opposite to each other of the half-shells 19, 20 and fitted on respective sections 6, 7; and
- a pair of annular seals 24, 25 each interposed between a relative flange 22, 23 and a relative side of the half-shell 20.

Each flange 22, 23 is made in two half-circular elements 26, 27, partially overlapped between them and releasably connected to each other at the overlapping zone.

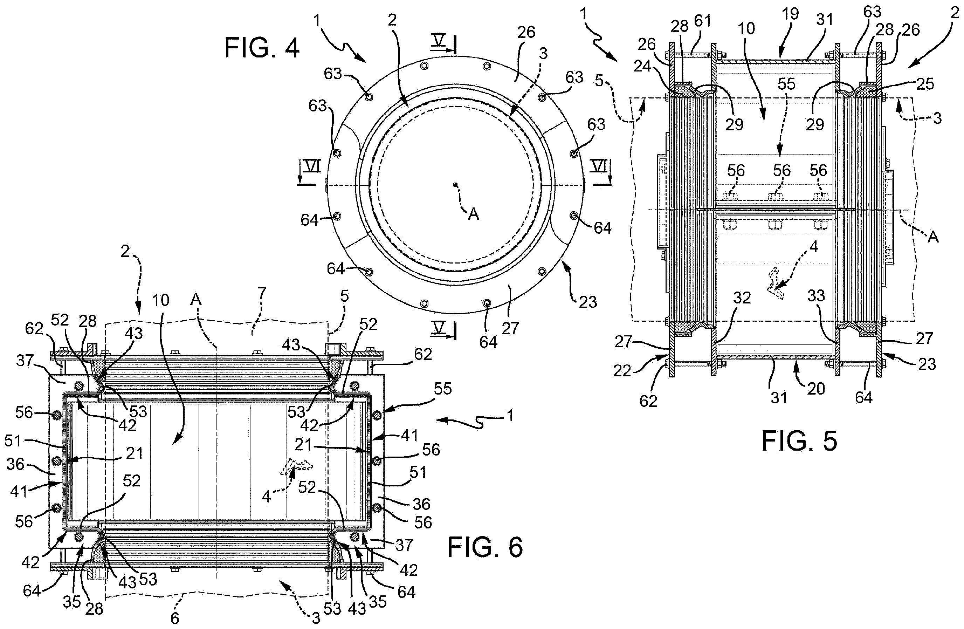

With particular reference to Figure 5, each flange 22, 23 further comprises a ring 28 protruding axially cantilevered towards the half-shells 19, 20 and radially spaced from the wall 5 of the tube 3.

The seals 24, 25 are radially interposed between the wall 5 and the ring 28.

The coupling 1 further comprises a pair of annular heads 29, protruding axially from relative flanks 32, 33 and each conformed as a pair of inclined planes firstly converging and then diverging with respect to the axis A.

The heads 29 have respective free ends opposite to the relative flanks 32, 33 and radially interposed between respective rings 28 and respective seals 24, 25 in a position that is axially spaced from the respective flange 22, 23.

Each half-shell 19, 20 comprises, in turn (Figures 4 and 5):
- a substantially half-cylindrical main element 30, 31;
- pair of axial end flanks 32, 33 opposite to each other and protruding radially from the relative element 30, 31 on the opposite side of the pipe 3; and
- a pair of crosspieces 34, 35 arranged at respective circumferential ends of the relative element 30, 31.

More precisely, the flanks 32, 33 lie on respective planes that are orthogonal to the axis A and parallel to each other.

The flanks 32, 33 and the crosspieces 34, 35 are orthogonal to each other.

The crosspieces 34, 35 also protrude axially from the flanks 32, 33.

In particular, the crosspieces 34, 35 of each half-shell 19, 20 lie on the same plane parallel to the axis A.

The crosspieces 34, 35 also have respective profiles shaped as rectangles and have respective larger sides 36 that are parallel to the axis A and respective smaller sides 37 that are orthogonal to the sides 36.

Each seal 24, 25 is radially interposed between the ring 28 of the relative flange 22, 23 and the relative portion 6, 7 of the pipe 3.

Each seal 24, 25 is also axially interposed between the head 29 of the relative flange 22, 23 and the relative flank 32, 33.

Advantageously, the crosspieces 34 define respective recesses 40 for housing relative seals 21.

More precisely, each seal 21 is completely housed in the relative recess 40 and abuts against the crosspiece 35.

Each recess 40 is shaped to prevent every axial movement of the seal 21.

In particular, each recess 40 is shaped correspondingly to the relative seal 21.

Each recess 40 comprises, in particular:
- a main section 41 parallel to the axis A; and
- a pair of sections 42 orthogonal to the section 41, arranged at respective axial ends of the section 41, and extending from the section 41 radially towards the axis A; and
- a pair of folded section 43 which extend between respective radially internal ends of respective sections 42 and respective open ends arranged on the side of corresponding portions 7, 8.

Each seal 21 comprises, in turn:
- a longer section 51 housed inside the section 41;
- a pair of sections 52 that are housed in respective sections 42 and orthogonal to the section 50; and
- a pair of sections 53 that are housed in respective sections 43.

The coupling 1 further comprises:
- releasable connection means 55 interposed between the crosspieces 34, 35; and
- releasable connection means 60 interposed between the flanges 22, 23 and half-shells 19, 20.

The connection means 55 can be tightened to generate a compressive load on the seals 21 and prevent the fluid from flowing out from the volume 10 at the interface between the crosspieces 34, 35.

In particular, the connection means 55 comprise a plurality of bolts 56 that are elongated radially to the axis A and tightened between the crosspieces 34, 35.

The connection means 60 can be tightened to generate a compressive load on the seals 24, 25 and prevent the fluid from flowing out from the volume 10 at the interface between flanges 22, 23 and half-shells 19, 20.

Preferably, the connection means 60 are directly interposed between the flange 22 and the flank 32 of the half-shell 19, and between the flange 23 and the flank 33 of the half-shell 20.

In particular, the connection means 60 comprise:
- a plurality of bolts 61, 62 angularly equispaced about the axis A and tightened directly between the flange 22 and the flanks 32 of the half-shells 19, 20; and
- a plurality of bolts 63, 64 angularly equispaced about the axis A and tightened directly between the flange 23 and the flanks 33 of the half-shells 19, 20.

In particular, the bolts 61, 62 connect the respective elements 26, 27 of the flange 22 to the flanks 32 of the half-shells 19, 20.

The bolts 63, 64 connect the respective elements 26, 27 of the flange 23 to the flanks 33 of the half-shells 19, 20.

The bolts 61, 62; 63, 64 extend parallel to the axis A.

The flanges 22, 23 have a plurality of through-holes 65, angularly equispaced about the axis A and crossed in a passing through manner by the bolts 61, 62; 63, 64.

The following describes the installation of the repair coupling 1 on the pipeline 2 at the rupture zone 4.

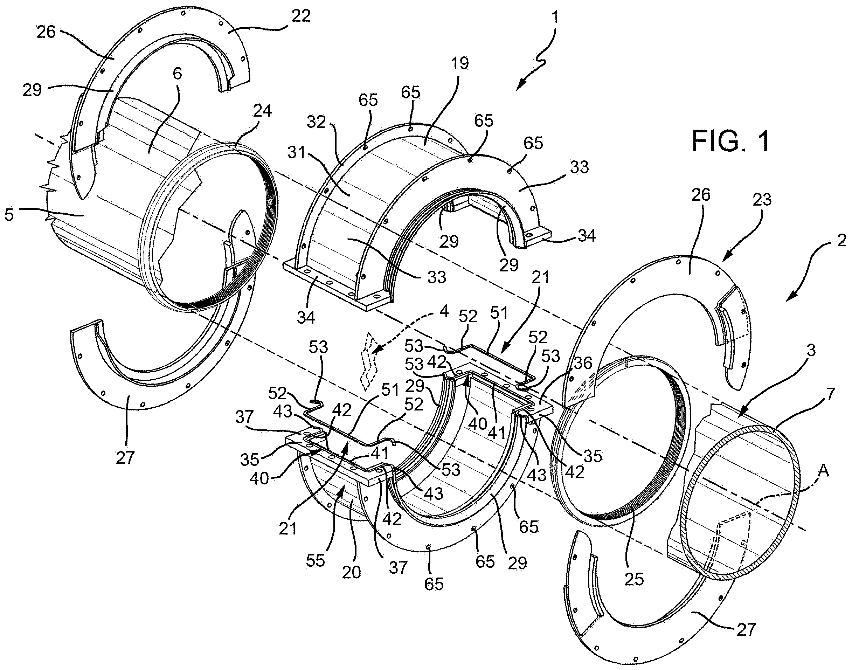

With reference to Figures 1 to 3, the seals 21 are inserted in the recesses 40 and the half-shells 19, 20 are mounted astride the rupture zone 4 so as to have the crosspieces 34, 35 facing each other.

At this point, the bolts 56 are tightened so as to compress the crosspieces 34, 35 and generate a compressive load on the seals 21.

Then, the seals 24, 25 are mounted between the respective flanges 22, 23 and the respective flanks 32, 33 of the half-shells 19, 20.

The bolts 61, 62 are tightened so as to compress the flanges 22, 23 against the respective flanks 32, 33 and to generate a compressive load on the seals 21.

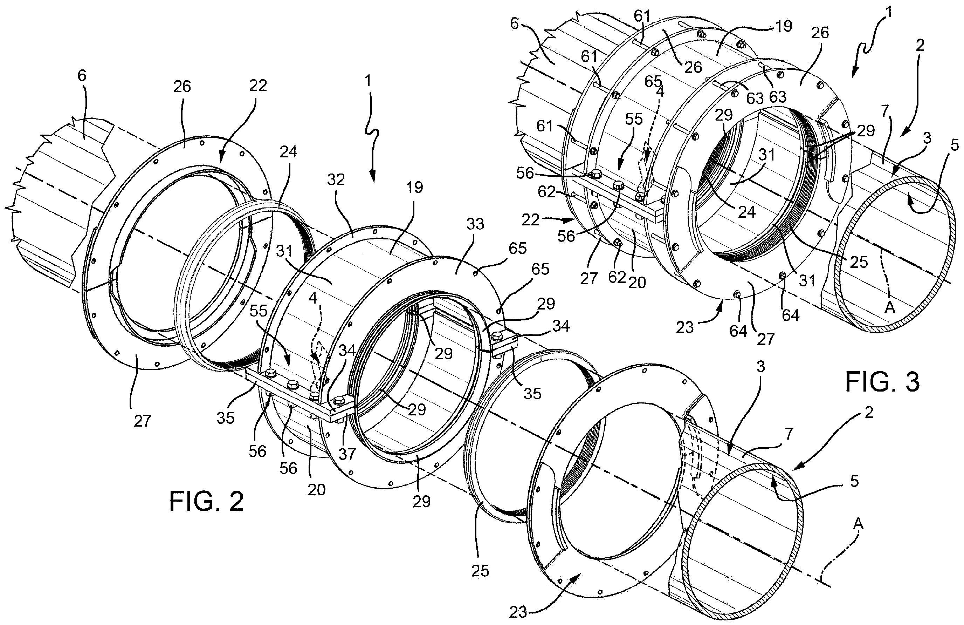

The repair coupling 1 defines (Figure 3) the volume 10 in fluidic communication with the rupture zone 4 and fluidically isolated from the outside of the pipe 3 and of the coupling 1.

During operation of the pipeline 2, the fluid flowing out from the rupture zone 4 remains trapped in the volume 10 and the pipeline 2 can continue to operate correctly without leakage to the outside of the pipeline 2.

From an examination of the repair coupling 1 and of the method according to the present invention the advantages it allows to be obtained are evident.

In particular, the closing plates 34 define the recesses 40 for housing the respective seals 21.

The recesses 40 allow to exactly identify the position of the relative seals 21, and to protect the seals 21 themselves during the assembly, transport and installation phases on the pipeline 2.

Each recess 40 axially constrains the relative seal 21 and therefore allows to eliminate the welded elements that are present in the solutions of the known type and commented on in the introductory part of the present description.

This makes it possible to improve the quality of the surfaces of the crosspieces 34, 35 and to optimally control the axial expansion of the seals 21 under load, with evident improvements in the quality of the fluid tightness provided by the seals 21.

More specifically, the absence of welded elements makes it possible to control the squeezing of the seals 21 in a uniform manner on all the crosspieces 34.

Finally, it is clear that modifications and variations can be made to the repair coupling 1 previously described without thereby departing from the scope of protection of the present invention.

## Claims

1. Repair coupling (1) comprising:
- a main body (19, 20) mountable astride a damaged zone (4) of a pipeline (2) for channelling a fluid and defining, in use, with said pipeline (2) an additional volume (10) fluidically connected with said damaged zone (4) and isolated from the outside of the repair coupling (1);
said main body (19, 20) extending along an axis (A) and comprising:
- a pair of half-shells (19, 20) with respective circumferential end plates (34, 35), lying on a plane parallel to said axis (A), facing each other and releasably connected to each other; and
- at least a first seal (21) interposed between said plates (34, 35) and adapted to allow said additional volume (10) to be fluid-tightly isolated from the outside of said repair coupling (1);
**characterized in that** at least one of said closing plates (34, 35) comprises a recess (40) for housing said first seal (21).

2. Repair coupling according to Claim 1, **characterized in that** said recess (40) is defined by only one (34) of said closing plates (34, 35).

3. Repair coupling according to Claim 1 or 2, **characterized in that** said recess (40) defines, in use, a stop surface for said first seal (21) in axial direction.

4. Repair coupling according to Claim 3, **characterized in that** said first seal (21) lies on a plane parallel to said axis (A).

5. Repair coupling according to any one of Claims 2 to 4, **characterized in that** said recess (40) comprises:
- a first section (41) of predominantly axial extension; and
- at least a second section (42) which is transversal to said first section (41).

6. Repair coupling according to Claim 5, **characterized in that** it comprises a pair of second sections (42) which are opposite to each other and between which said first section (41) is interposed.

7. Coupling according to Claim 5 or 6, **characterized in that** at least one said second section (42) is orthogonal to said first section (41).

8. Coupling according to any one of the preceding claims, **characterized in that** it comprises a pair of said first seals (21) which are housed in respective said recesses (40).

9. Assembly comprising:
- a repair coupling (1) according to any one of the preceding claims; and
- said pipeline (2);
said pipeline (2) comprising, in turn:
- a first and a second section (6, 7) which are axially opposite to each other;
- said rupture zone (4), which is axially interposed between said first and second section (6, 7) and on which said repair coupling (1) is mounted.

10. Method for repairing a pipeline (2) comprising a rupture zone (4), **characterized in that** it comprises the step of mounting a repair coupling (1) according to any one of the preceding claims at said rupture zone (4) without interrupting the operation of said pipeline (2).
